Europäisches Patentamt

European Patent Office

Office européen des brevets

(19)

(11) Veröffentlichungsnummer: **0 100 896**
**B1**

(12) # EUROPÄISCHE PATENTSCHRIFT

(45) Veröffentlichungstag der Patentschrift: **20.01.88**

(21) Anmeldenummer: **83106845.7**

(22) Anmeldetag: **12.07.83**

(51) Int. Cl.⁴: **B 07 C 3/16,** B 65 G 47/49, G 11 C 23/00

(54) **Magnetcodieranordnung für Werkstückträger.**

(30) Priorität: **19.07.82 DE 3226939**
**10.03.83 DE 3308603**
**11.04.83 DE 3312949**

(43) Veröffentlichungstag der Anmeldung:
**22.02.84 Patentblatt 84/08**

(45) Bekanntmachung des Hinweises auf die
Patenterteilung:
**20.01.88 Patentblatt 88/03**

(84) Benannte Vertragsstaaten:
**AT BE CH DE FR GB IT LI LU NL SE**

(56) Entgegenhaltungen:
**DE-C-1 092 708**
**DE-C-1 288 195**
**US-A-3 100 040**
**US-A-3 157 270**
**US-A-3 714 664**
**US-A-3 825 927**

(73) Patentinhaber: **HORSTMANN-ELECTRONIC**
**Hirtenstrasse 3**
**D-8012 Ottobrunn (DE)**

(72) Erfinder: **Horstmann, Frank Rüdiger**
**Hirtenstrasse 3**
**D-8012 Ottobrunn (DE)**

(74) Vertreter: **Patentanwälte TER MEER - MÜLLER -
STEINMEISTER**
**Mauerkircherstrasse 45**
**D-8000 München 80 (DE)**

Courier Press, Leamington Spa, England.

EP 0 100 896 B1

**Beschreibung**

Die Erfindung betrifft eine Magnetcodieranordnung für Werkstückträger gemäß dem Oberbegriff des Patentanspruchs 1 mit mehreren in einem Halter gelagerten Dauermagneten, deren aufeinanderfolgende Magnetisierungsrichtungen eine binär verschlüsselte Dezimalzahl darstellen.

Eine eCodieranordnung an einem Werkstückträger dient im allgemeinen dazu, den Werkstückträger und damit ein von ihm transportiertes Werkstück zu einem bestimmten Arbeitsplatz zu leiten. Während des Fertigungsprozesses des Werkstücks sind an diesem verschiedene Arbeitsgänge durchzuführen, wie z. B. Fräsen, Polieren, Waschen oder Löten. Jeder Arbeitsgang findet an einem bestimmten Arbeitzplatz statt. In einer Großfertigung werden die Werkstücke von Arbeitsplatz zu Arbeitsplatz über ein Fördermittel transportiert. Jedem Arbeitsplatz ist in der Regel ein bestimmter Code zugeordnet. Wenn das Werkstück zu einem bestimmten Arbeitsplatz automatisch transportiert werden soll, so ist der Werkstückträger mit dem Code des Arbeitsplatzes zu versehen.

Das Codieren eines Werkstückträgers mit dem Code eines bestimmten Arbeitsplatzes erfolgt seit längerem automatisch, und zwar in der Regel durch einen mechanischen Binärcode. Dabei werden durch eine pneumatische Einrichtung verstellbare stifte verwendet. Steht der Stift aus seiner Halterung hervor, so entspricht dies dem Wert logisch "1", anderenfalls dem Wert logisch "0".

Neben dieser mechanischen Codiervorrichtung sind schon seit langem auch Magnetcodieranordnungen bekannt, die sich in der Fertigung gegen die mechanischen Codieranordnungen jedoch nicht durchsetzen konnten, da zum magnetischen Codieren ein sehr geringer Abstand zwischen einer Codeschreibvorrichtung und dem Werkstückträger erforderlich ist. Eine Magnetcodieranordnung ist z. B. aus der US—3 173 533 bekannt. Sie weist mehrere in einem Halter gelagerte Magnéte auf, die von außen magnetisierbar sind. Die Magnete können in zwei Polarisationsrichtungen magnetisiert werden, von denen die eine dem Wert logisch "1" und die andere dem Wert logisch "0" entspricht. Ein solcher Code, z. B. "0010010" wird in sieben aufeinanderfolgende Magnete am Werkstückträger eingeschrieben. Eine Lesevorrichtung an einem jeweiligen Arbeitsplatz liest den Code. Wie schon eingangs dieses Absatzes angeführt, besteht das Problem des Einhaltens sehr geringer Toleranzen, und zwar sowohl beim Schreiben wei auch beim Lesen. Der Abstand der Schreib- und Leseköpfe von den Magneten darf höchstens etwa 0,5 mm zu den umzumagnetisierenden Magneten aufweisen. Das Einhalten dieser Bedingung ist unter Fertigungsbedingungen äußerst schwer zu erfüllen.

Wesentlich geringere Schreibleistungen werden benötigt, wenn die Mangete nicht ummagnetisiert werden, sondern wie in der DE—C—1 092 708 erläutert, durch Dauermagnete gebildet werden, die drehbeweglich gelagert sind und deren Orientierung beim Einschreiben (Codieren) berührungslos mit Hilfe von in ihre Nähe zu bringenden Dauermagneten oder Elektromagneten erfolgt. Es ist dann allerdings erforderlich, die drehbaren Dauermagnetkörperchen in ihrer, einem bestimmten Binärwert entsprechenden Vorzugslage zu fixieren, was gemäß der genannten Druckschrift beispielsweise durch mechanische Einrastmittel, aber auch durch Polschuhe aus magnetisch weichem Werkstoff erfolgen kann, die in bezug auf die drehbaren Magnetkörperchen ortsfest angebracht werden.

Der Erfindung liegt die Aufgabe zugrunde, eine Magnetcodieranordnung für Werkstückträger nach der aus der DE—C—1 092 708 bekannten Art einfacher zu gestalten, so daß insbesondere bei räumlich kleinem Aufbau eine sehr preiswerte Herstellung möglich wird.

Die Erfindung besteht bei einer Magnetcodieranordnung für Werkstückträger mit mehreren in einem Halter beweglich gelagerten zylinder- oder scheibenförmigen Dauermagneten, die von einer externen Schreibeinrichtung entsprechend einem Schreibbefehl, der einer binärverschlüsselten Dezimalzahl entspricht, in eine von zwei einer bestimmten Magnetisierungsrichtung entsprechende Endlagen gesetzt werden und in dieser Endlage durch ein jeweils zugeordnetes weichmagnetisches und in bezug auf den Halter ortsfest angebrachtes Element festgehalten werden, darin, daß die Dauermagneten in im Halter angeordneten Bohrungen, deren Durchmesser so bemessen sind, daß die Dauermagneten innerhalb dieser Bohrungen lose geführt sind, unter der Wirkung der Schreibeinrichtung von der einen in die andere Endlage, in der jeweils die Achse eines Dauermagneten parallel fur Achse der Bohrung liegt, frei umklappen können und daß die weichmagnetischen Elemente auf einer Seite des Halters und in Ausrichtung auf die Bohrungen angebracht sind.

Vorteilhafte Ausgestaltungen und Ergänzungen des Erfindungsgedankens sind in Unteransprüchen angegeben und werden nachfolgend noch näher erläutert.

Bekannte Magnetcodieranordnungen, die nach dem Prinzip des Ummagnetisierens arbeiten, verwenden Magnetisierpulse von etwa 0,1 ms Länge. Bei einem Schreibabstand von 0,5 mm beträgt die Schreibleistung etwa 10 kW und bei einem Schreibabstand von 1 mm etwa 30 kW. Demgegenüber wurde für eine erfindungsgemäße Magnetcodieranordnung experimentell ermittelt, daß es bei einem Schreibabstand von 5 mm und einer Pulsdauer von 5 ms ausreichend ist, eine Schreibleistung von 0,576 W zu verwenden, um die Codieranordnung umzuschreiben.

Ein ganz besonders einfacher Aufbau ergibt sich mit der Erfindung dadurch, daß die Magnete in einer Lagerung gehalten werden, in der sie zwischen den beiden Endlagen frei umklappen können. Dann ist nämlich z. B. einfach ein stabförmiger Kunststoffhalter mit Bohrungen zu verwenden, in denen jeweils ein Magnet angeordnet ist.

Sind die Magnete frei umklappbar angeordnet, wie im vorigen Absazt angegeben, si ist er erforderlich, die Magnete nach dem Einstellen in eine Endlage in dieser festzuhalten. Hierbei ist es von besonderem Vorteil, einen Weichmagnetschluß zu verwenden, durch den der ausgereichtete Magnet jeweils in seiner Lage gehalten wird. Ein solcher Weichmagnetschluß hat den Vorteil, daß er das Feld eines Schreibmagneten etwas bündelt. Dadurch kann die erforderliche Schreibleistung noch weiter herabgesetzt werden. Dazu ist es jedoch erforderlich, daß der Weichmagnetschluß nur so groß ausgebildet ist, daß er den auszurichtenden Magneten nicht abschirmt. Vorteilhafterweise ist der Weichmagnetschluß durch ein weichmagnetisches Pulver gebildet, das in einem ausgehärteten Kunststoff, z. B. direkt im Kunststoff des Magnethalters, suspendiert ist.

Die erfindungsgemäße Anordnung hat den weiteren Vorteil, daß die eingeschriebene Information direkt optisch durch die unterschiedlichen Lagen der Magnete erkennbar ist. Werden z. B. die klappbar gelagerten Magnete mit einem blau gekennzeichneten Nordpol und einem rot gekennzeichneten Südpol verwendet, so ist der codierte Arbeitsplatz direkt durch die Aufeinanderfolge blauer und roter Markierungen zu erkennen. Es kann dann jedem Arbeitsplatz eine Karte mit einer Farbfolge zugeordnet werden, so daß sich durch Vergleichen der Farbkarte mit der Farbfolge in der Magnetcodieranordnung durch jeden Arbeiter leicht feststellen läßt, ob der richtige Arbeitsplatz codiert ist, oder welcher Arbeitsplatz auf dem Werkstückträger eingeschrieben ist. Eine Änderung der Codierung läßt sich auch auf einfachste Art und Weise von Hand, z. B. durch einen Stabmagneten, erzielen. Die erfindungsgemäße Anordnung weist somit in bezug auf ihre praktische Anwendbarkeit in der Fertigung zahlreiche Vorteile gegenüber bisher bekannten Magnetcodieranordnungen auf.

Die Erfindung sowie vorteilhafte Weiterbildungen und Ausgestaltungen derselben werden im folgenden anhand von Figuren näher veranschaulicht. Es zeigen:

Fig. 1 eine schematische perspektivische Ansicht einer Ausführungsform einer erfindungsgemäßen Magnetcodieranordnung mit klappbaren Magneten, wobei am Halter Weichmagnetschlußelemente aus weichmagnetischem Pulver angebracht sind; und

Fig. 2 eine schematische perspecktivische Ansicht der Anordnung gemäß Fig. 1, an deren Halter zueinander parellele Weichmagnet-Stäßchen angebracht sind.

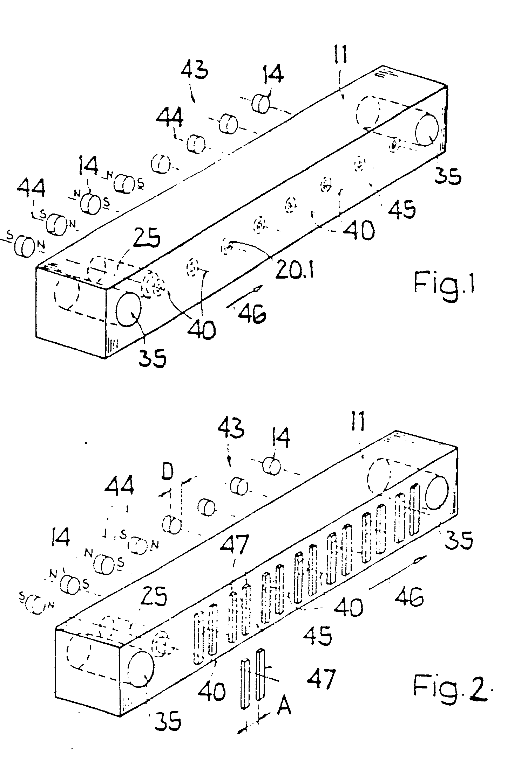

Die Magnetcodiervorrichtung 43 gemäß Fig. 1 weist einen Halter 11 auf, der aus einer Kunststoffleiste gefertigt ist. Im Halter 11 sind durchgehende Bohrungen 35 zu dessen Befestigung an einem (nicht gezeigten) Werkstückträger vorhanden. Weiterhin sind von hinten eingesenkte Bohrungen 25 vorhanden, in die scheibenförmige Magnetchen 14 eingesetzt sind. Nach dem Einsetzen der Magnetchen werden die Bohrungen wieder verschlossen, was nicht näher dargestellt ist. Die scheibenförmigen Magnetchen sind in Richtung ihrer Achsen 44 magnetisiert. Die eine Scheibenfläche ist also ein Nordpol N und die andere ein Südpol S. Die Magnetchen weisen z. B. einen Durchmesser von 3 mm und eine Stärke von 1,2 mm auf. Die Bohrungen weisen demgegenüber z. B. einen Durchmesser von 3,5 mm auf. Dahere können die Magnetchen 14 frei in den Bohrungen 25 umklappen. In der jeweiligen Endlage liegt die Aschse 44 eines Magneten 14 parallel zur Achse 40 der Bohrung 25, in der er sich befindet.

Um die Magnetchen 14 in ihrer jeweiligen Endlage zu halten, ist an der Vorderseite 45, von der her die Codierung und das Ablesen erfolgt, vor jeder der Bohrungen 25 ein Weichmagnetschluß-Element 20.1 angebracht. Dieses ist im Ausführungsbeispiel kreisförmig ausgeführt, also entsprechend der Form der Magnetchen 14. Die Weichmagnetschluß-Elemente können auch eine andere Form aufweisen, wobei es jedoch zweckmäßig ist, daß sie an die Form der jeweils verwendeten Magneten angepaßt ist und die Scheibenfläche des zugehörigen Magneten im wesentlichen abdeckt.

Gemäß einem bevorzugten Ausführungsbeispiel wird ein weichmagnetisches Pulver, z. B. aus einem Material, das unter der Bezeichnung St37 enhältlich ist, mit einer Stärke von etwa 0,2 mm auf eine Stirnfläche eines waagrecht liegenden Magnetscheibchens 14 aufgestreut. Danach wird ein Tropfen eines dünnflüssigen, aushärtbaren Schnellklebers aufgebracht. Das Pulver wird durch diesen Tropfen nicht weggeschwemmt, da es durch die magnetische Kraft des Magnetscheibchens gehalten wird. Nach dem Aushärten des Klebers wird das so gebildete Kunststoffscheibchen mit dem in ihm suspendierten Pulver vom Magneten abgezogen und auf die Vorderseite 45 des Halters 11 aufgeklebt. Das so gebildete Scheibchen kann aber auch in eine in der Vorderseite 45 eingebrachte Vertiefung eingelegt werden. Dadurch ist das so gebildete Weichmagnetschluß-Element 20.1 vor Beschädigung geschützt.

Das weichmagnetische Pulver kann auch auf andere Art und Weise in einem aushärtbaren Kunststoff suspendiert sein. Insbesondere ist es möglich, schon bei der Herstellung der Kunststoffleiste des Halters 11 das weichmagnetische Pulver an entsprechenden Stellen im Kunststoff zu suspendieren. Dadurch werden die Weichmagnetschluß-Elemente gleichzeitig mit dem Halter 11 hergestellt und sind dadurch auch optimal gegen Beschädigungen geschützt. Wichtig ist, daß mindestens so viel Pulver verwendet wird, daß durch seine weichmagnetische Wirkung ein in eine Endlage gebrachtes Magnetscheibchen 14 auch in dieser Endlage gehalten werden kann. Wird aber zu viel Pulver verwendet, so muß wegen sehr starken Festhaltens in der Endlage der Magnetisierungsabstand verringert werden. Auf den Abstand einer Hallsonde beim Messen der Codierung hat dies jedoch keinen negativen, eher einen positiven Einfluß. Es wurde festgestellt, daß sich die Menge des weichmagnetischen Pulvers so wählen läßt, daß es aufgrund seiner Bündelwirkung möglich ist, den Abstand einer codierenden Schreibspule oder einer Leseeinrichtung von einem Magnetchen größer zu wählen, als dies ohne erfindungsgemäß ausgebildete Weichmagnetschluß-Elemente möglich ist. Eine optimale Menge zu verwendenden weichmagnetischen Pulvers läßt sich leicht durch Versuche bestimmen. Bei den Versuchen ist darauf zu achten, daß ein möglichst großer Magnetisierabstand und/oder Leseabstand erzielt ist, wobei aber das einzelne Weichmagnetschluß-Element 20.1 das Magnetchen 14 in seiner Endlage noch ausreichend festhält. Die Optimierung hängt dabei von Verwendungszweck ab. In einer Fertigung, bei der die Werkstückträger praktisch keiner Erschütterung ausgesetzt sind, kann vor allem im Hindblick auf einen großen Magnetisierabstand optimiert werden. Bei Magnetcodiervorrichtungen für Werkstückträger, die starken Erschütterungen ausgesetzt sind, ist dagegen vor allem darauf zu achten, daß ausgerichtete Magnete 14 durch die Weichmagnetschluß-Elemente 20.1 sicher gehalten werden.

Bei den frei drehenden Magnetscheibchen 14 der Ausführung gemäß Fig. 1 besteht das Problem, daß benachbarte Magnetscheibchen 14 beim Umklappen einen so großen Magneteinfluß aufeinander ausüben können, daß sie einander in einer Lage festhalten, die nicht einer gewünschten Endlage entspricht. Bei bevorzugten Magnetchen mit 3 mm Durchmesser und 1,2 mm Stärke, die ein sehr starkes Magnetfeld aufweisen, tritt dieser Effekt bei einem gegenseitigen Abstand der Bohrungen 25 von etwa 12 mm ein. Drehen sich in diesem Fall zwei benachbarte Magnetscheibchen mit ihren Achsen 44 in derjenigen Ebene, die benachbarte Bohrungsachsen 40 miteinander verbindet, so kann es vorkommen, daß der Südpol eines Magnetchens genau auf den Nordpol des benachbarten Magnetchens ausgerichtet ist. Die Achsen 44 der beiden benachbarten Magnetchen 14 stehen dann in Längserstreckungsrichtung 46 des Halters 11. Die aufeinander ausgeübten Magnetkräfte können so groß sein, daß ein von außen angreifendes Magnetfeld nicht mehr in der Lage ist, die beiden sich gegenseitig festhaltenden Magnetchen vollends in eine Endlage umzuklappen.

Um diesen Effekt auch bei eng benachbarten Bohrungen 25 auszuschalten, ist gemäß Fig. 2 eine Anordnung von zueinander parallelen Stäbchen 47 aus weichmagnetischem Material an der Vorderseite 45 des Halters 11 angebracht. Jeweils zwei zu einer Bohrung 25 gehörige Stäbchen 47 sind symmetrisch zur Bohrungsachse 40 in einem gegenseitigen Abstand A angebracht, der im wesentlichen dem Durchmesser D eines Magnetscheibchens 14 entspricht. Die Stäbchen 47 stehen rechtwinklig zur Ebene, in der die Bohrungsachsen 40 benachbarter Bohrungen 25 verlaufen.

Es hat sich herausgestellt, daß bei dieser Anordnung ein Magnetischeibchen 14 nicht mehr um eine beliebige Drehachse umklappt, sondern um eine Achse, die im wesentlichen in der Ebene liegt, in der benachbarte Bohrungsachsen 40 verlaufen. Dadurch ist es nicht mehr möglich, daß ein Südpol und ein Nordpol direkt benachbarter Magnetscheibchen 14 aufeinander zu zeigen und sich in dieser Stellung gegenseitig festhalten. Der Abstand zu benachbarten Bohrungen 25 kann dann gegenüber bisherigen Ausführungsforme weiter verringert werden.

Auch bei der Ausführungsform gemäß Fig. 2 können zusätzlich Weichmagnetschluß-Elemente 20.1 wie bei der Ausführungsform gemäß Fig. 1 vorhanden sein. Derartige Weichmagnetschluß-Elemente sind für die Endlagenhalterung von Magneten in erfindungsgemäßen Magnetcodiervorrichtungen immer geeignet, unabhängig davon, ob die Magnete zwischen den Endlagen zwangsgeführt werden oder frei umklappbar sind.

Bei einer Magnetcodieranordnung erfindungsgemäßer Art sind die Magnete, wie an sich bekannt, hartmagnetisch und brauchen zum Codieren nicht ummagnetisiert, sondern nur durch Umklappen in den Bohrungen des Halters in unterschiedliche Lagen gebracht zu werden. Die praktische Ausführung und Herstellung wird dadurch besonders einfach.

Wegen der Tatsache, daß bei erfindungsgemäßen Magnetcodieranordnungen Magnete nur zwischen zwei Endlagen bewegt, aber nicht ummagnetisiert werden, ist es möglich, sehr viel größere Schreibabstände einhalten zu können. Es können aber auch erheblich größere Leseabstände eingehalten werden. Dies daher, weil Hartmagnete mit einem möglichst starken Feld gewählt werden können. Bei Ummagnetisierverfahren dagegen sind die Magnete so auszuwählen, daß sie sich mit unter Fertigungsbedingungen noch erzielbaren Feldstärken und Abständen ummagnetisieren lassen. Dies führt aber zu Magnetmaterialien, mit denen keine so starken Felder erzielbar sind, wie dies bei Materialien möglich ist, die nur nach dem Gesichtspunkt eines möglichst starken Feldes ausgewählt sind. Durch das Ummagnetisieren läßt sich auch vom Verfahren her kein allzu starkes Feld erzielen, so daß insgesamt auch der Leseabstand erheblich kleiner sein muß als bei magnetcodieranordnung gemäß der Erfindung.

**Patentansprüche**

1. Magneticodieranordnung für Werkstückträger mit mehreren in einem Halter (11) beweglich gelagerten zylinder- oder scheibenförmigen Dauermagneten (14), die von einer externen Schreibeinrichtung entsprechend einem Schreibbefehl, der einer binär verschlüsselten Dezimalzahl entspricht, in eine von zwei einer bestimmten Magnetisierungsrichtung entsprechende Endlagen gesetzt werden und in dieser Endlage durch ein jeweils zugeordnetes weichmagnetisches und in bezug auf den Halter (11) ortsfest angebrachtes Element festgehalten werden, dadurch gekennzeichnet, daß die Dauermagneten (14) in im Halter (11) angeordneten Bohrungen (25), deren Durchmesser so bemessen sind, daß die Dauermagneten (14) innerhalb dieser Bohrungen (25) lose geführt sind, unter der Wirkung der Schreibeinrichtung von der einen in die andere Endlage in der jeweils die Achse (44) eines Dauermagneten (14) parallel zur Achse (40) der Bohrung (25) liegt, frei umklappen können und daß die weichmagnetischen Elemente (20.1) auf einer Seite des Halters (11) und in Ausrichtung auf die Bohrungen (25) angebracht sind.

2. Magnetcodieranordnung nach Anspruch 1, dadurch gekennzeichnet, daß die weichmagnetischen Elemente (20.1) an die Form der jeweils verwendeten Dauermagnete (14) angepaßt und direkt am Halter (11) angebracht sind.

3. Magnetcodieranordnung nach Anspruch 2, dadurch gekennzeichnet, daß die weichmagnetischen Element (20.1) kreisförmig ausgebildet sind.

4. Magnetcodieranordnung nach Anspruch 2 oder 3, dadurch gekennzeichnet, daß die weichmagnetischen Elemente (20.1) durch Scheibchen oder Tropfen von in einem Kleber oder aushärtbaren Kunststoff suspendiertem weichmagnetischen Pulver gebildet sind.

5. Magnetcodieranordnung nach Anspruch 4, dadurch gekennzeichnet, daß die Scheibchen oder Tropfen in vertiefungen am Halter (11) und in Ausrichtung auf die Achsen (40) der Bohrungen (25) eingesetztg sind.

6. Magnetcodieranordnung nach Anspruch 2, dadurch gekennzeichnet, daß der Halter (11) als einstückige Kunststoffleiste gefertigt und die weichmagnetischen Elemente (20.1) durch an entsprechenden Stellen und in Ausrichtung auf die Achsen (40) der Bohrungen (25) im Kunststoffmaterial suspendiertes weichmagnetisches Pulver gebildet sind.

7. Magnetcodieranordnung nach einem der vorstehenden Ansprüche, dadurch gekennzeichnet, daß auf einer Seite am Halter (11) jeweils zwei zu einer Bohrung (25) gehörige Stäbchen (47) aus weichmagnetischem Material symmetrisch und in rechtem Winkel zu Bohrungsachse (40) in einem gegenseitigen Abstand (A) angebracht sind, der im wesentlichen dem Durchmesser (D) eines Dauer magneten (14) entspricht.

## Revendications

1. Dispositif de codage magnétique pour des supports de pièces à usiner, comportant plusieurs aimants permanents (14) en forme de cylindres ou de disques, qui sont montés de manière à être mobiles dans un support (11) et sont amenés dans une première de deux positions d'extrémité correspondant à une direction déterminée d'aimantation, par un dispositif externe d'enregistrement, conformément à un ordre d'inscription qui correspond à un nombre décimal codé en binaire, et sont maintenus dans cette position d'extrémité par un élément respectivement associé, constitué en un matériau magnétique doux et pouvant être monté fixe par rapport au support (11), caractérisé en ce que les aimants permanents (14) peuvent, sous l'action du dispositif d'enregistrement, pivoter librement dans des perçages (25), qui sont ménagés dans le support (11) et dont les diamètres sont dimensionnés de telle sorte que les aimants permanents (14) sont guidés de façon à l'intérieur de ces perçages (25), depuis la première position d'extrémité dans la seconde position d'extrémité, dans laquelle l'axe (44) d'un aimant permanent (14) est respectivement parallèle à l'axe (40) du perçage (25), et que les éléments (20.1) réalisés en un matériau magnétique doux sont disposés sur une face de support (11) en étant alignés avec des perçages (25).

2. Dispositif de codage magnétique selon la revendication 1, caractérisé en ce que les éléments (20.1) en matériau magnétique doux sont adaptés à la forme des aimants permanents (4) respectivement utilisés et sont installés directement sur le support (11).

3. Dispositif de codage magnétique selon la revendication 2, caractérisé en ce que les éléments (20.1) en matériau magnétique doux sont réalisés avec une forme circulaire.

4. Dispositif de codage magnétique selon la revendication 2 ou 3, caractérisé en ce que les éléments (20.1) en matériau magnétique doux sont constitués par des petits disques ou des gouttes de poudre en matériau magnétique doux, en suspension dans une colle ou une matière plastique durcissable.

5. Dispositif de codage magnétique selon la revendication 4, caractérisé en ce que les petits disques ou les gouttes sont insérés dans des renfoncements ménagés dans le support (11) et sont alignés avec les axes (40) des perçages (25).

6. Dispositif de codage magnétique selon la revendication 2, caractérisé en ce que le support (11) est réalisé sous la forme d'une barrette monobloc en matière plastique et que les éléments (20.1) réalisés en un matériau magnétique doux sont formés par une poudre constituée par un matériau magnétique doux, qui est en suspension dans la matière plastique en des emplacements correspondants et dans des positions alignées avec les axes (40) des perçages (25).

7. Dispositif de codage magnétique selon l'une des revendications précédentes, caractérisé en ce que respectivement deux barrettes (47), qui sont associées à un perçage (25) et sont réalisées en un matériau magnétique doux, sont montées, sur une face du support (11), d'une manière symétrique, perpendiculairement à l'axe (40) du perçage, à une distance réciproque (A), qui correspond essentiellement au diamètre (D) d'un aimant permanent (14).

## Claims

1. Magnetic coding arrangement for workpiece carriers with a number of cylindrical or discoid permanent magnets (14), which are mounted movably in a holder (11), and which can be displaced by an external recording device in accordance with a write instruction, which corresponds to a binar-coded decimal number, into one of two end positions corresponding to a certain direction of magnetization, and is held in this end position by means of a respectively assigned soft magnetic element which is arranged in fixed position with respect to the holder (11), characterized in that the permanent magnets (14) can, under the effect of the recording device, freely flip over in boreholes (25), which are arranged in the holder (11) and whose diameter is dimensioned such that the permanent magnets (14) are loosely guided within these boreholes (25), from one end position into the other end position, in which the axis (44) of one permanent magnet (14) is in each case parallel to the axis (40) of the borehole (25), and in that the soft magnetic elements (20.1) are fitted on one side of the holder (11) and in alignment with the boreholes (25).

2. Magnetic coding arrangement according to Claim 1, characterized in that the soft magnetic elements (20.1) are in each case adapted to the shape of the permanent magnets (14) used and are fitted directly on the holder (11).

3. Magnetic coding arrangement according to Claim 2, characterized in that the soft magnetic elements (20.1) are of circular design.

4. Magnetic coding arrangement according to Claim 2 or 3, characterized in that the soft magnetic elements (20.1) are formed by wafers or drops of soft magnetic powder suspended in an adhesive or thermosetting plastic.

5. Magnetic coding arrangement according to Claim 4, characterized in that the wafers or drops are inserted in depressions in the holder (11) and in alignment with the axes (40) of the boreholes (25).

6. Magnetic coding arrangement according to Claim 2, characterized in that the holder (11) is made as a onepiece plastic strip and the soft magnetic elements (20.1) are formed by soft magnetic powder suspended in the plastics material at corresponding points and in alignment with the axes (40) of the boreholes (25).

7. Magnetic coding arrangement according to one of the preceding claims, characterized in that in each case two small rods (47) made of soft magnetic material and associated with a borehole (25) are fitted on one side on the holder (11) symmetrically and at right angles to the borehole axis (40) as a distance (A) from each other which corresponds substantially to the diameter (D) of one permanent magnet (14).

0 100 896

Fig.1

Fig.2